(19) Europäisches Patentamt
European Patent Office
Office européen des brevets

(11) **EP 2 868 233 A1**

(12) **EUROPEAN PATENT APPLICATION**
published in accordance with Art. 153(4) EPC

(43) Date of publication:
06.05.2015 Bulletin 2015/19

(51) Int Cl.:
*A47C 7/38* *(2006.01)*   *B60N 2/48* *(2006.01)*

(21) Application number: 13813411.9

(86) International application number:
PCT/JP2013/068019

(22) Date of filing: 01.07.2013

(87) International publication number:
WO 2014/007201 (09.01.2014 Gazette 2014/02)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 02.07.2012 JP 2012148721

(71) Applicant: Toyota Jidosha Kabushiki Kaisha
Toyota-shi, Aichi 471-8571 (JP)

(72) Inventors:
• TAKAHASHI, Gen
Toyota-shi, Aichi 471-8571 (JP)
• KATO, Hideyuki
Toyota-shi, Aichi 471-8571 (JP)
• KOBAYASHI, Hideki
Toyota-shi, Aichi 471-8571 (JP)

(74) Representative: Intès, Didier Gérard André et al
Cabinet Beau de Loménie
158, rue de l'Université
75340 Paris Cedex 07 (FR)

(54) **HEADREST SUPPORT STRUCTURE**

(57) Two headrest stays (14L, 14R) are supported such that, when the tilting amount in the seat front-rear direction of the headrest stays (14L, 14R) relative to a seatback frame (10) is within a specified range, the support stiffness of a headrest (13) relative to the seat front-rear direction is reduced in comparison to when the tilt amount is outside the range. The two headrest stays (14L, 14R) are secured to be swingable in the seat front-rear direction in the headrest (13).

Fig.2

**Description**

TECHNICAL FIELD

The present invention relates to a headrest support structure that supports a headrest by supporting two headrest stays spaced apart in a lateral direction of a seat on a seatback frame.

BACKGROUND ART

Rotational speed of engines has been reduced to improve fuel efficiency of the engines. This has undesirably caused the resonance frequency of front-rear seat vibration to match the frequency range of engine vibration and thus deteriorated the drivability.

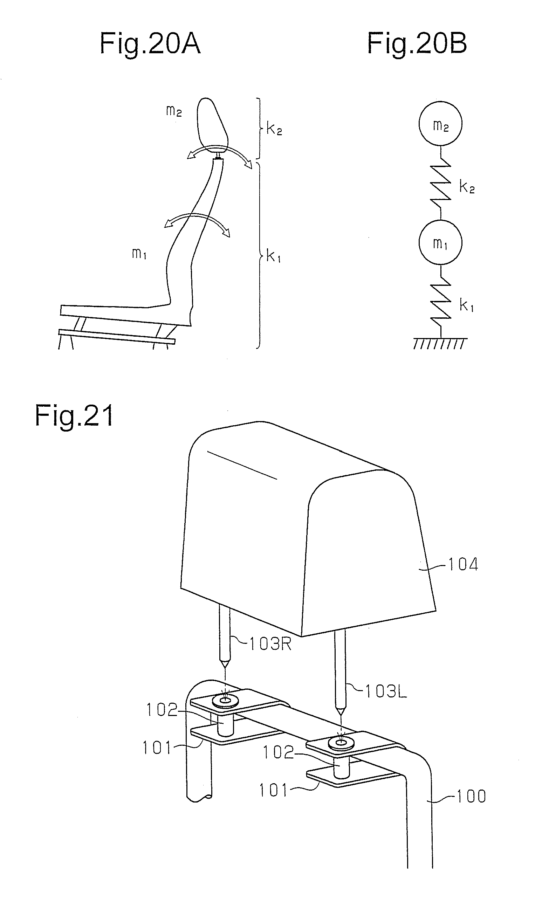

Front-rear vibration of a vehicle seat configured as shown in Fig. 20A can be represented by a two-degree-of-freedom spring-mass model as shown in Fig. 20B. In Figs. 20A and 20B, $m_1$ represents the equivalent mass of a seat frame including a rail and a seatback frame, and $m_2$ represents the equivalent mass of a headrest. Furthermore, $k_1$ represents the equivalent stiffness of the seat frame, and $k_2$ represents the equivalent stiffness of a headrest support structure.

The resonance frequency $f_n$ of such front-rear seat vibration is represented by the following expression (1). As is apparent from the expression (1), lowering the resonance frequency of the front-rear vibration requires reducing the equivalent stiffness ($k_1$, $k_2$) or increasing the equivalent mass ($m_1$, $m_2$).

[ Expression 1 ]

$$f_n = \frac{1}{2\pi}\sqrt{\frac{m_2 k_1 + m_1 k_2 + m_2 k_2 - \sqrt{(m_1 k_2 + m_2 k_1 + m_2 k_1)^2 - 4m_1 m_2 k_1 k_2}}{2m_1 m_2}} \quad \cdots (1)$$

A headrest support structure disclosed in Patent Document 1 has been proposed, in which the resonance frequency of the front-rear vibration in the vehicle seat is lowered by reducing the support stiffness of the headrest. The configuration of such a conventional headrest support structure will now be described.

Fig. 21 shows a seatback frame 100 with two headrest brackets 101 secured at the top to be spaced apart in the lateral direction of the seat. On each of the left and right headrest brackets 101, a headrest guide 102 is mounted. The seatback frame 100 supports a headrest 104 by fitting two headrest stays 103L, 103R provided on the headrest 104 in the headrest guides 102.

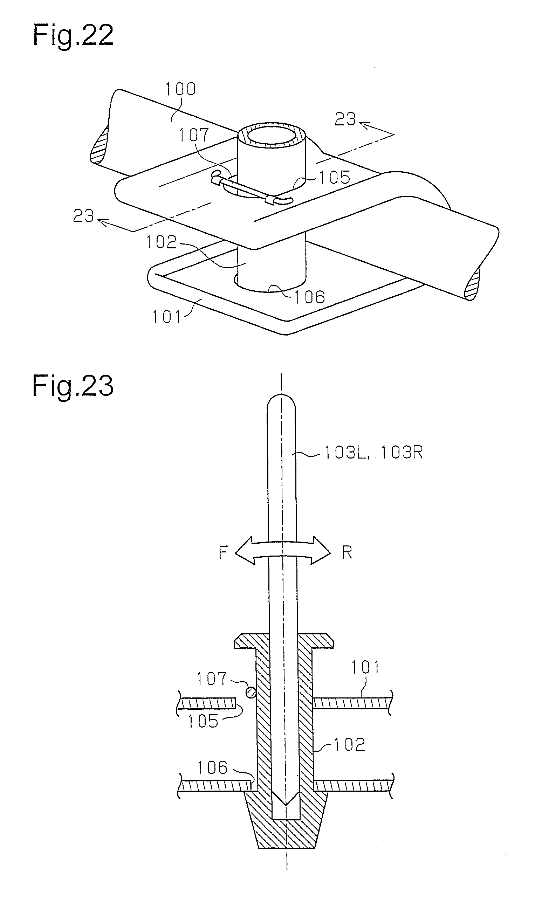

As shown in Fig. 22, each headrest bracket 101 is formed of a substantially U-shaped metal plate. The upper section and the lower section of the headrest bracket 101 respectively include through holes 105, 106, through which the associated headrest guide 102 is inserted. The through hole 105 in the upper section of the headrest bracket 101 is an elongated hole extending in the front and rear direction of the seat. The length of the through hole 105 in the front and rear direction of the seat is significantly longer than the outer diameter of the headrest guide 102 inserted in the through hole 105. The through hole 106 formed in the lower section of the headrest bracket 101 is an elongated hole extending in the front and rear direction of the seat. The length of the through hole 106 in the front and rear direction of the seat is slightly longer than the outer diameter of the headrest guide 102.

In addition, a spring 107 extends across the front end of each through hole 105. The headrest guide 102 is inserted in the through hole 105 in a state urged by the spring 107.

As shown in Fig. 23, such a headrest support structure supports the headrest guides 102, in which the headrest stays 103L, 103R are fitted, to be tiltable in a forward direction F of the seat and a rearward direction R of the seat while flexing the springs 107 and using the through holes 106 as fulcrums. That is, the headrest support structure elastically supports the headrest 104 against the displacement in the front and rear direction of the seat by using the springs 107. This reduces the support stiffness of the headrest 104 in the front-rear direction of the seat and thus lowers the resonance frequency $f_n$ of the front-rear vibration in the vehicle seat.

The related art further includes Patent Document 2.

PRIOR ART DOCUMENTS

Patent Documents

Patent Document 1: Japanese Laid-Open Utility Model Publication No. 61-149552
Patent Document 2: Japanese Examined Patent Publication No. 2005-170144

SUMMARY OF THE INVENTION

Problems that the Invention is to Solve

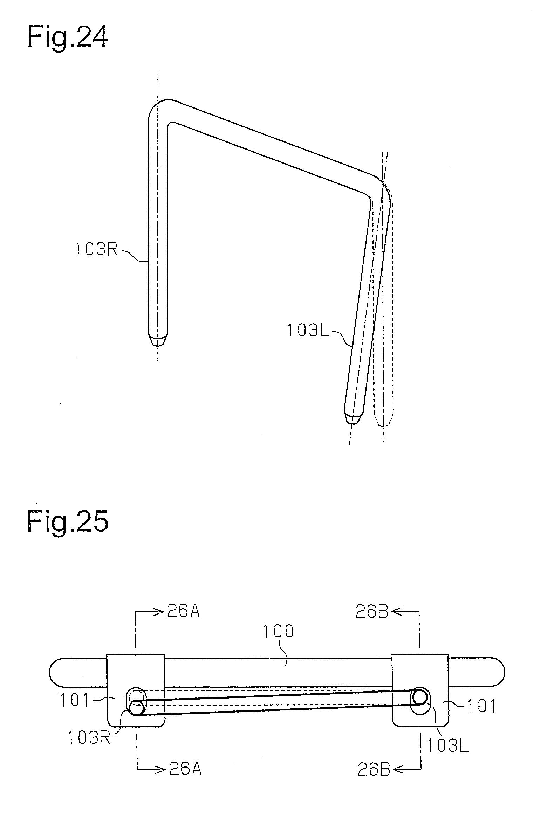

As shown in Fig. 24, the two headrest stays 103L, 103R, which project downward from the headrest 104, are typically formed as an integral part by bending a single pipe into a substantially U-shape. Such a structure may cause the axes of the left and right headrest stays 103L, 103R to be misaligned because of manufacturing errors as shown in the drawing.

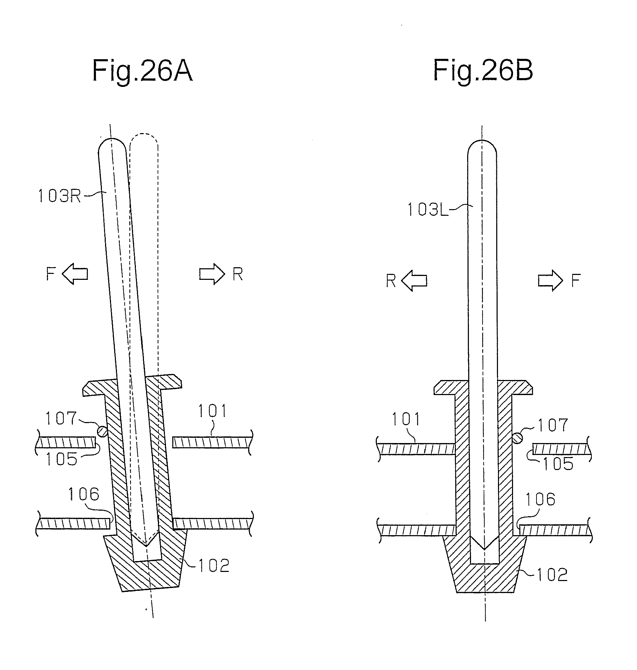

As shown in Fig. 25, if the axes of the left and right headrest stays 103L, 103R are misaligned in the front-rear direction of the seat, at least one of the left and right headrest stays cannot be mounted on the associated headrest guide 102 in an appropriate manner. For example, even if the left headrest stay 103L is inserted in the associated headrest guide 102 in an appropriate manner as shown in Fig. 26B, the right headrest stay 103R causes the associated headrest guide 102 to tilt in the front-rear direction of the seat as shown in Fig. 26A.

The conventional headrest support structure described above allows the headrest guides 102 to tilt relative to the headrest brackets 101 in the front-rear direction of the seat by a certain amount through flexure of the springs 107. The through holes 106 also provide the headrest guides 102 with play in the front-rear direction of the seat. This structure allows the headrest stays 103L, 103R to be mounted somehow even if the axes of the headrest stays 103L, 103R are misaligned to some extent. In such a case, however, the flexure of the springs 107 is greater than assumed, and the support stiffness of the headrest 104 against the displacement in the front-rear direction of the seat is undesirably increased. Thus, the resonance frequency $f_n$ of the front-rear vibration in the vehicle seat cannot be set as designed.

To allow the headrest stays 103L, 103R that have greatly misaligned axes due to a manufacturing error to be mounted, an increased amount of play needs to be provided between each headrest guide 102 and the associated through hole 106 in the front-rear direction of the seat. Such a structure makes the headrest guides 102 unstable and fails to support the headrest 104 in an appropriate manner.

Accordingly, it is an objective of the present invention to provide a headrest support structure that allows the resonance frequency of a seat of front-rear vibration to be set accurately. Means for Solving the Problems

To achieve the foregoing objective and in accordance with one aspect of the present invention, a headrest support structure is provided that includes two headrest stays, which extend downward from a headrest and are arranged to be spaced apart in a lateral direction of a seat, and a seatback frame supporting the headrest stays. The headrest stays are tiltable relative to the seatback frame in a front-rear direction of the seat perpendicular to the lateral direction of the seat. The headrest stays are supported such that, when the tilting amount of the headrest stays relative to the seatback frame in the front-rear direction of the seat is within a specified range, the support stiffness of the headrest relative to the front-rear direction of the seat is small as compared to the support stiffness in a case where the tilting amount is out of the range. The two headrest stays are secured in the headrest to be swingable relative to each other in the front-rear direction of the seat.

According to the above structure, the support stiffness of the headrest in relation to the seatback frame is set small when the tilting amount of the headrest stays in relation to the seatback frame in the front-rear direction of the seat is within a certain range. Thus, for minute displacement of the headrest in the front-rear direction of the seat due to transmission of vibration from the engine or the vehicle body, the support stiffness of the headrest is small and the resonance frequency of the front-rear seat vibration is lowered.

If the tilting amount of the headrest stays relative to the seatback frame in the front-rear direction of the seat is increased beyond such a range, the support stiffness of the headrest in relation to the seatback frame is increased. Thus, for example, if a vehicle is struck from the rear, which moves the head of an occupant rapidly rearward, the headrest reliably receives the head to protect the head and the neck of the occupant in a suitable manner.

If the axes of the left and right headrest stays are misaligned in the front-rear direction of the seat in such a structure, the headrest stays are prevented from being mounted on the seatback frame in an appropriate position. As a result, the initial tilting amount of the headrest stays in the front-rear direction of the seat in relation to the seatback frame deviates from the assumption. The structure may thus fail to provide a desired support stiffness and to set the resonance frequency of the seat of front-rear vibration as designed.

In this respect, the above structure, in which the two left and right headrest stays are secured in the headrest to be swingable relative to each other in the front-rear direction of the seat, prevents the axes of the headrest stays from being misaligned in the front-rear direction of the seat when the headrest stays are mounted to the seatback frame. Thus, the above structure accurately sets the resonance frequency of the seat of the front-rear vibration.

The configuration of the above described aspect preferably includes two brackets, which are provided on the seatback frame and correspond to the headrest stays, and two support members, each of which is arranged between one of the brackets and the corresponding headrest stay. The head rest support structure is configured either such that each support member is swingable relative to the corresponding bracket or such that each headrest stay is swingable relative to the corresponding support member.

When each support member is swingable relative to the corresponding bracket, a first elastic member that urges the headrest stay rearward is prefereably provided in an upper section of the support member and between a front side of the support member and the bracket, and a second elastic member that urges the headrest stay forward is preferably provided in a lower section of the support member and between a rear side of the support member and the bracket.

When each headrest stay is swingable relative to the corresponding support member, a first elastic member that urges the headrest stay rearward is preferably provided in an upper section of the support member and between a front side of the headrest stay and a support member, and a second elastic member that urges the headrest stay forward is preferably provided in a lower section of the support member and between a rear side of the headrest stay and the support member.

The first and second elastic members each preferably include a spring.

The specified range is preferably a range in which the headrest stays tilt until the springs are completely compressed.

The two headrest stays are preferably formed of separate members.

The two headrest stays are preferably coupled to the headrest in a state separate from each other.

Each headrest stay preferably includes an upper section extending in the lateral direction of the seat, and the upper sections of the headrest stays are preferably coaxial.

BRIEF DESCRIPTION OF THE DRAWINGS

Fig. 1 is an exploded perspective view illustrating a headrest support structure according to one embodiment;

Fig. 2 is a cross-sectional side view illustrating a support of the headrest support structure according to the embodiment and the surroundings of the support;

Fig. 3 is a perspective view illustrating the headrest stays of the headrest support structure according to the embodiment and a securing structure of the headrest stays;

Fig. 4A is a cross-sectional view schematically showing the manner in which pressure operates in the headrest support structure when force is applied to the headrest from the front;

Fig. 4B is a cross-sectional view schematically showing the manner in which pressure operates in the headrest support structure when force is applied to the headrest from the rear;

Fig. 5 is a graph showing the relationship between load applied to the headrest in the front-rear direction of the seat and the displacement of the headrest in the front-rear direction of the seat;

Fig. 6 is a see-through perspective view illustrating the inside of a conventional headrest that employs divided headrest stays;

Fig. 7 is a cross-sectional plan view showing a state where great force is applied to the conventional headrest;

Fig. 8A is a perspective view illustrating another example of a spring that can be employed by the above embodiment;

Fig. 8B is a cross-sectional side view illustrating the example;

Fig. 9A is a perspective view illustrating another example of a spring that can be employed by the above embodiment;

Fig. 9B is a cross-sectional side view illustrating the example;

Fig. 10 is a cross-sectional side view illustrating another example of a spring that can be employed by the above embodiment;

Fig. 11 is a cross-sectional side view illustrating a support according to a modification of the above embodiment in which configuration of the support structure is changed;

Fig. 12 is a cross-sectional side view illustrating a support according to a modification of the above embodiment in which a support bracket is provided with a support structure;

Fig. 13 is a cross-sectional side view illustrating a support according to a modification of the above embodiment in which a support structure is provided on the inner circumference of the support;

Fig. 14 is a cross-sectional side view illustrating a support according to a modification of the above embodiment in which a headrest stay is provided with a support structure;

Fig. 15A is a front view illustrating a headrest stay securing structure according to a modification of the above embodiment in which the shaft supporting manner of the headrest stays is modified;

Fig. 15B is a perspective view illustrating the securing structure of the headrest stays;

Fig. 16A is a front view illustrating a headrest stay securing structure according to a modification of the above embodiment in which the shaft supporting manner of the headrest stays is modified;

Fig. 16B is a perspective view illustrating the securing structure of the headrest stays;

Fig. 17A is a front view illustrating a headrest stay securing structure according to a modification of the above embodiment in which the shaft supporting manner of the headrest stays is modified;

Fig. 17B is a perspective view illustrating the securing structure of the headrest stays;

Fig. 18 is a front view illustrating a headrest stay securing structure according to a modification of the above embodiment in which the shaft supporting manner of the headrest stays is modified;

Fig. 19 is a front view illustrating a headrest stay securing structure according to a modification of the above embodiment in which the shaft supporting manner of the headrest stays is modified;

Fig. 20A is a side view illustrating a vehicle seat;

Fig. 20B is a schematic diagram of a spring-mass model in relation to front-rear vibration;

Fig. 21 is an exploded perspective view illustrating a conventional headrest support structure;

Fig. 22 is a perspective view illustrating a headrest bracket of the conventional headrest support structure and the surroundings of the headrest bracket;

Fig. 23 is a cross-sectional side view of the headrest guide and the surroundings taken along line 23-23 of Fig. 22;

Fig. 24 is a perspective view illustrating a headrest stay in which axes of left and right stays are misaligned;

Fig. 25 is a plan view illustrating the conventional headrest support structure in a state where the headrest stays are mounted with the axes of the left and right stays being misaligned;

Fig. 26A is a cross-sectional side view taken along line 26A-26A of Fig. 25, illustrating the conventional headrest support structure; and

Fig. 26B is a cross-sectional side view taken along line 26B-26B of Fig. 25, illustrating the conventional headrest support structure.

## MODES FOR CARRYING OUT THE INVENTION

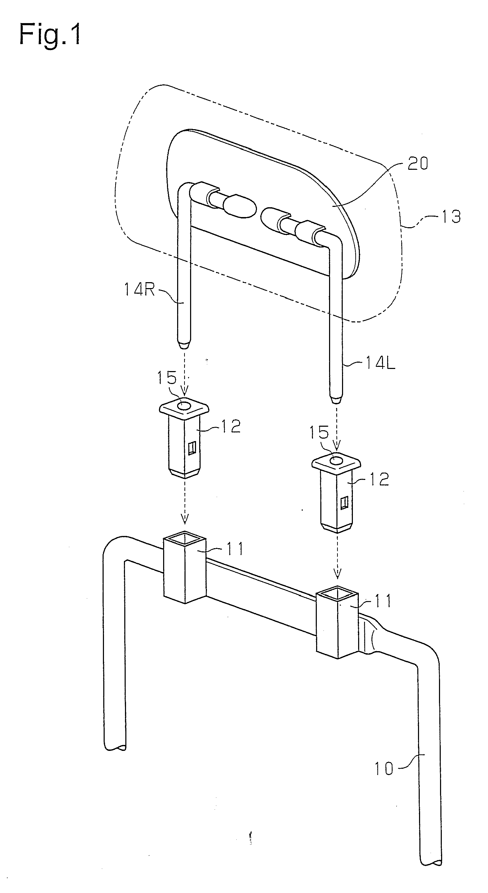

A headrest support structure according to one embodiment will now be described with reference to Figs. 1 to 7. The headrest support structure of the present embodiment is applied to a vehicle seat.

The entire configuration of the headrest support structure according to the present embodiment will be described.

Fig. 1 shows a seatback frame 10 having two support brackets 11 secured to the top of the seatback frame 10 in a state spaced apart in the lateral direction of a seat. The support brackets 11 are metal tubes with a rectangular cross-section.

Each of the support brackets 11 receives a support member, which is a support 12 in this embodiment, inserted from above the seat. The supports 12 are formed of plastic. Each support 12 includes a bore 15 having a circular cross-section and extending in the vertical direction of the seat.

Two left and right headrest stays 14L, 14R are provided below a headrest 13 in a state spaced apart in the lateral direction of the seat. The two headrest stays 14L, 14R extend downward from the headrest 13. Inserting the headrest stays 14L, 14R respectively in the bores 15 of the two supports 12 allows the headrest 13 to be supported by the seatback frame 10. The two supports 12 are each arranged between one of the support brackets 11 and the corresponding one of the headrest stays 14L, 14R. The headrest stays 14L, 14R are swingable relative to the seatback frame 10 in the front-rear direction of the seat perpendicular to the lateral direction of the seat.

The left and right headrest stays 14L, 14R are formed of separate members. The headrest stays 14L, 14R are coupled to a plastic insert 20 embedded in the headrest 13 to be swingable in the front-rear direction of the seat. The headrest stays 14L, 14R are coupled to the insert 20 in a state spaced apart from each other.

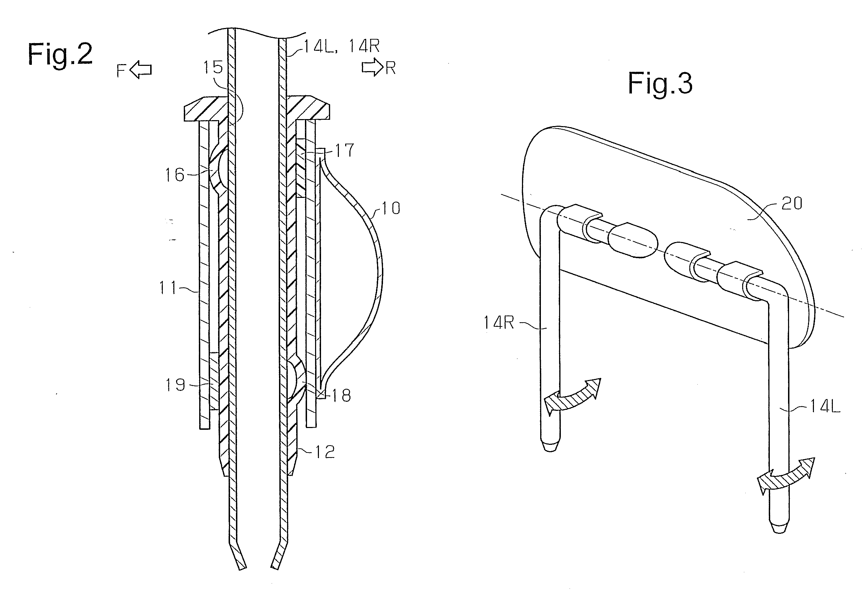

The structure of the support 12 will now be described with reference to Fig. 2.

As shown in Fig. 2, part of each support 12 is inserted in the associated support bracket 11. At the upper section of the inserted part of the support 12, a spring 16 is provided on the side facing in the seat forward direction F. The spring 16, which is part of the side wall of the support 12 that arches and projects in the seat forward direction F, functions as a plate spring. The springs 16 correspond to first elastic members that urge the headrest stays 14L, 14R rearward.

A bead 17 is secured to the outer circumferential surface of each support 12 and is located at position spaced from the part where the spring 16 is formed in the seat rearward direction R. The bead 17 is formed of the same material as the support 12 and is formed to be in surface contact with the inner circumferential surface of the support bracket 11. Since the bead 17 fills the gap between the inner circumferential surface of the support bracket 11 and the outer circumferential surface of the support 12 in the front-rear direction of the seat, the spring 16 is arranged in a compressed state.

At the lower section of the inserted part of the support 12, which is inserted in the support bracket 11, a spring 18 is formed on a side facing in the seat forward direction F. Like the spring 16, the spring 18, which is part of the side wall of the support 12 that arches and projects in the seat rearward direction R, also functions as a plate spring. The springs 18 correspond to second elastic members that urge the headrest stays 14L, 14R forward.

A bead 19 is secured to the outer circumferential surface of each support 12 and is located at a position spaced from the part where the spring 18 is formed in the seat rearward direction R. The bead 19 is also formed of the same material as the support 12. Since the bead 19 fills the gap between the inner circumferential surface of the support bracket 11 and the outer circumferential surface of the support 12 in the front-rear direction of the seat, the spring 18 is also arranged in a compressed state.

Referring now to Fig. 3, the headrest stays 14L, 14R and the securing structure of the headrest stays 14L, 14R will be described.

As shown in Fig. 3, the left and right headrest stays 14L, 14R are formed of metal pipes and are substantially L-shaped with the upper sections bent in the lateral direction of the seat. The headrest stays 14L, 14R are rotationally supported by the insert 20 at the upper sections, which are bent in the lateral direction of the seat. The upper sections of the headrest stays 14L, 14R are aligned on the insert 20. That is, the left and right headrest stays 14L, 14R are secured via the insert 20 to be coaxial and swingable relative to each other in the front-rear direction of the seat.

Operation of the headrest support structure according to the present embodiment configured as described above will now be described.

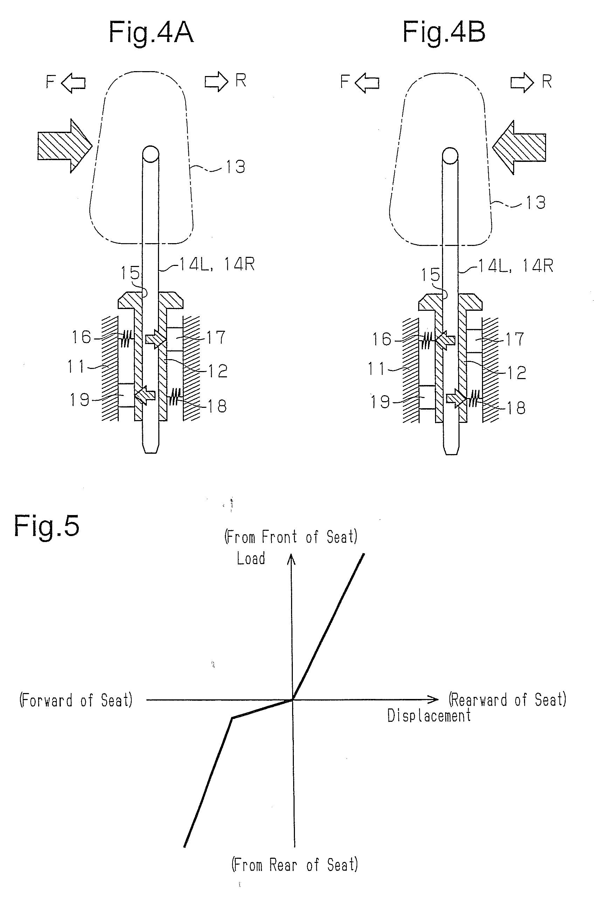

When force is applied to the headrest 13 from the seat forward direction F, the headrest stays 14L, 14R receive a load in the direction in which the upper ends of the headrest stays 14L, 14R are tilted in the seat rearward direction R. Each support bracket 11 in this case receives, as shown in Fig. 4A, pressure from the support 12 at the upper rear portion where the bead 17 is provided and at the lower front portion where the bead 19 is provided. Since the stiffness of the beads 17, 19 is relatively high, the support stiffness of the headrest 13 against the force from the seat forward direction F is also high.

When force is applied to the headrest 13 from the seat rearward direction R, the headrest stays 14L, 14R receive a load in the direction in which the upper ends of the headrest stays 14L, 14R are tilted in the seat forward direction F. Each support bracket 11 in this case receives, as shown in Fig. 4B, pressure from the support 12 at the upper front portion where the spring 16 is provided and at the lower rear portion where the spring 18 is provided. Since the stiffness of the springs 16, 18 is lower than the stiffness of the beads 17, 19, the support stiffness of the headrest 13 in this case is lower than the that in the case where force is applied from the seat forward direction F. Furthermore, if the displacement of the headrest 13 in the seat forward direction F exceeds a certain amount, the springs 16, 18 will be completely compressed and the support stiffness of the headrest 13 will be increased.

A convex stopper may be provided on the side circumference of the support brackets 11 around the springs 16, 18. In this case, the support stiffness of the headrest 13 is increased at the point in time where the headrest 13 is displaced in the seat forward direction F until the stoppers abut against the inner circumferences of the supports 12. Thus, the height of the stoppers determines the displacement amount of the headrest 13 in the seat forward direction F at which the support stiffness of the headrest 13 changes.

According to such a headrest support structure, the relationship between the load in the front-rear direction of the seat applied to the headrest 13 and the displacement of the headrest 13 in the front-rear direction of the seat relative to the load is as shown in Fig. 5. That is, the headrest support structure supports the headrest stays 14L, 14R such that, if the tilting amount of the headrest stays 14L, 14R in the front direction of the seat relative to the seatback frame 10 is within a specified range, the support stiffness of the headrest 13 in the front-rear direction of the seat is smaller than that in a case where the tilting amount is out of the range. In the initial state, that is, in a state where no external force is applied to the headrest 13, the headrest 13 is supported to be located at the rearmost position (in the seat rearward direction R) of the range in which the support stiffness is small. The phrase "within the specified range" refers to the tilting range of the headrest stays 14L, 14R until the springs 16, 18 are completely compressed.

The headrest support structure of the present embodiment reduces the support stiffness of the headrest 13 for minute displacement of the headrest 13 in the front-rear direction of the seat caused by transmission of the vibration from the engine and the vehicle body and thus lowers the resonance frequency of the vibration in the front-rear direction of the seat. In contrast, the headrest support structure has high support stiffness against the displacement of the headrest 13 in the seat rearward direction R. Thus, for example, if the vehicle is struck from the rear causing the head of an occupant to move rapidly rearward, the headrest support structure reliably receives the head with the headrest to protect the head and the neck of the occupant in a suitable manner.

The headrest support structure that has the two headrest stays 14L, 14R formed by bending a single bar such as that described in BACKGROUND ART may fail to provide a desired support property of the headrest 13 if the left and right headrest stays 14L, 14R are mounted on the seatback frame 10 with their axes displaced in the front-rear direction of the seat. That is, the above-mentioned displacement of the axes may allow one of the headrest stays 14L, 14R to be properly inserted in the bore 15 of the associated support 12, but causes the axis of the other one of the headrest stays 14L, 14R to be displaced from the axis of the bore 15. If the headrest stays 14L, 14R are forcibly inserted in the bores in this state, the supports 12 will tilt with respect to the support brackets 11. The tilting may change the compression amount of the springs 16, 18 at the initial position or form a gap between the beads 17, 19 and the inner circumferential surfaces of the support brackets 11, leading to a failure to provide a desired support property. This may prevent the resonance frequency of the seat of the front-rear vibration from being set as designed.

In this respect, the headrest support structure of the present embodiment has two left and right headrest stays 14L, 14R coupled to the headrest 13 to be swingable relative to each other in the front-rear direction of the seat. This prevents the axes of the headrest stays 14L, 14R from being displaced in the front-rear direction of the seat when the headrest stays 14L, 14R are mounted to the seatback frame 10. Also, if the axes of the bores 15 formed in the left and right supports 12 are displaced because of displacement of the mounting positions of the support brackets 11 or the supports 12 caused by manufacturing errors, the relative swinging of the headrest stays 14L, 14R absorbs the displacement.

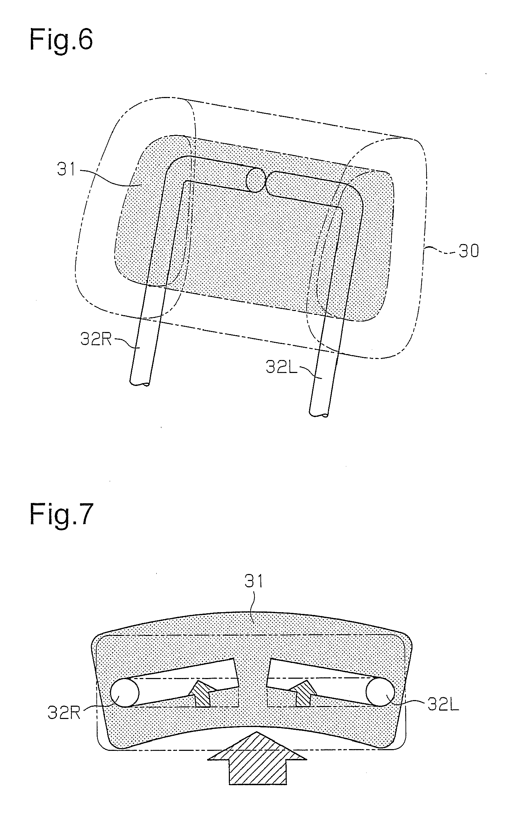

Patent Document 2 of the conventional technique also discloses a headrest in which two left and right headrest stays are provided in a headrest to swing relative to each other. Fig. 6 shows a conventional headrest 30 including a core pad 31 arranged at the central portion. The core pad 31 has a higher restitution coefficient than that of the surrounding area. The upper section of the two left and right headrest stays 32L, 32R are insert molded when the core pad 31 is formed.

Such a conventional headrest 30 also allows the headrest stays 32L, 32R to swing relative to each other through elastic deformation of the core pad 31. If, however, great force is applied to the center portion of the headrest 30 as shown in Fig. 7, the upper section of the headrest stays 32L, 32R undesirably pivot in accordance with elastic deformation of the core pad 31. Thus, the headrest stays 32L, 32R fail to reliably receive a load applied to the headrest 30 with high stiffness.

In this respect, the headrest support structure of the present embodiment permits the left and right headrest stays 14L, 14R to swing relative to each other in the front-rear direction of the seat, but maintains the position of swing shafts by coupling the left and right headrest stays 14L, 14R to each other via the insert 20. Thus, a load applied to the headrest 30 is reliably received by the headrest stays 32L, 32R having a high stiffness, and if, for example, the vehicle is struck from the rear, the headrest 13 more reliably receives the head of the occupant.

The above-mentioned support structure of the headrest according to the present embodiment has the following advantages.

(1) The present embodiment supports the headrest stays 14L, 14R such that the support stiffness of the headrest 13 in the front-rear direction of the seat is small when the tilting amount of the headrest stays 14L, 14R relative to the seatback frame 10 in the front-rear direction of the seat is within the specified range as compared to the support stiffness when the tilting amount is out of the specified range. Thus, the support stiffness of the headrest 13 is small for minute displacement of the headrest 13 in the front-rear direction of the seat caused by transmission of vibration from the engine and the vehicle body, and the resonance frequency of the vibration in the front-rear direction of the seat is reduced.

(2) The present embodiment supports the headrest stays 14L, 14R to be located at the rearmost position (in the seat rearward R) of the range in which the support stiffness is small when no external force is applied to the headrest 13. Thus, while reducing the resonance frequency of the vibration in the front-rear direction of the seat, the present embodiment provides a high support stiffness against the displacement of the headrest 13 in the seat rearward direction R so that if, for example, the vehicle is struck from the rear, the headrest 13 reliably receives the head of the occupant.

(3) The present embodiment secures the two left and right headrest stays 14L, 14R in the headrest 13 to be swingable relative to each other in the front-rear direction of the seat. Thus, when the two headrest stays 14L, 14R are mounted on the seatback frame 10, the two headrest stays 14L, 14R are prevented from being axially misaligned due to of manufacturing errors. Also, the displacement of the mounting position of the support brackets 11 and the supports 12 due to manufacturing errors are absorbed by relative swinging of the headrest stays 14L, 14R. Thus, the headrest stays 14L, 14R are mounted in an appropriate manner, and the resonance frequency of the seat of the front-rear vibration is set accurately.

Other Embodiments

The above described embodiment may be modified as follows.

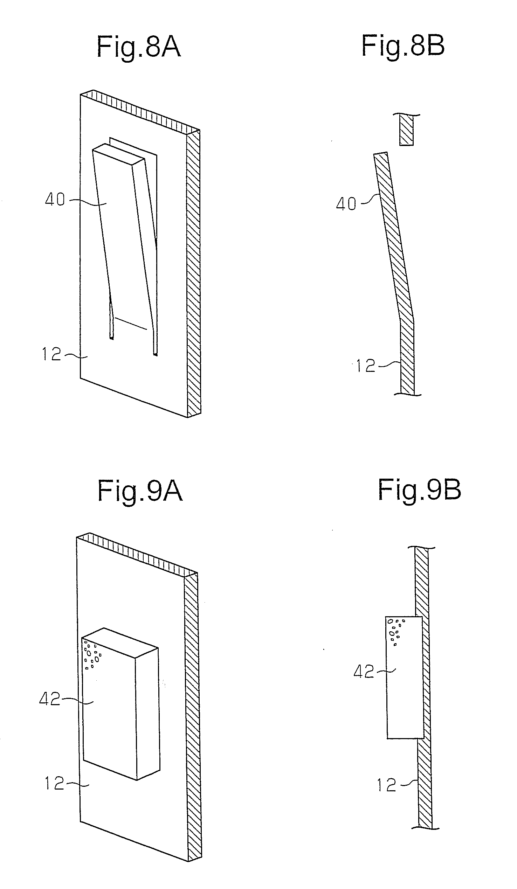

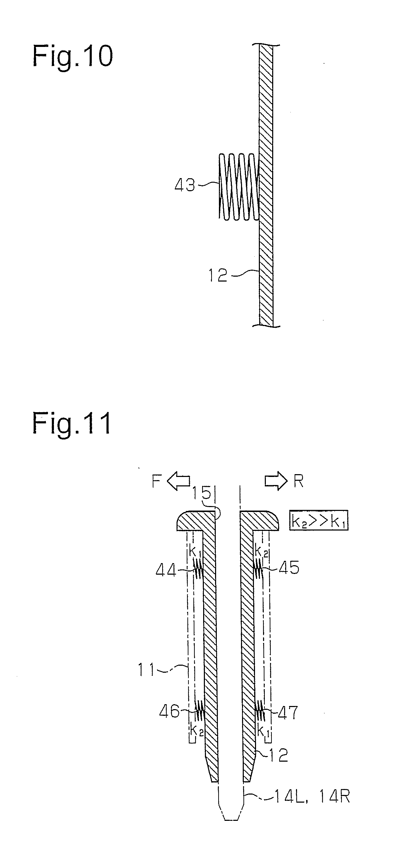

The above-described embodiment employs, as the springs 16, 18 provided on the supports 12, plate springs formed by parts of the side walls of the supports 12 that arch and protrude outward. The springs 16, 18 may have other structures. For example, as shown in Figs. 8A and 8B, a cantilever plate spring 40 formed by cutting and lifting part of the side wall of each support 12 may be employed as the springs 16, 18. Furthermore, as shown in Figs. 9A and 9B, an elastic member 42 formed of material with a high coefficient of elasticity, such as urethane foam, may be mounted on the side wall of each support 12. Such elastic members 42 may function as the springs 16, 18. Alternatively, as shown in Fig. 10, a coil spring 43 may be mounted on the side wall of each support 12.

In the above-described embodiment, the beads 17, 19 are mounted on the outer walls of the supports 12, but may be integrally formed with the supports 12.

In the above-described embodiment, the beads 17, 19 are formed of the same material as the supports 12, but may be formed of any material having a sufficiently higher stiffness than the springs 16, 18.

In the above-described embodiment, each support 12 is provided with the spring 16 at the upper front section, the bead 17 at the upper rear section, the bead 19 at the lower front section, and the spring 18 at the lower rear section. The arrangement of the members 16 to 19 may be changed as follows.

In the example shown in Fig. 11, springs 44, 45, 46, and 47 are respectively provided at the upper front, the upper rear, the lower front, and the lower rear of the support 12. The springs are provided at all four positions where the support 12 and the associated support bracket 11 contact each other. Note that, the spring constant $k_2$ of the springs 45, 46 provided at the upper rear section and the lower front section of the support 12 is set significantly greater than the spring constant $k_1$ of the springs 44, 47 provided at the upper front section and the lower rear section of the support 12. In this case also, the support stiffness against the forward displacement of the headrest 13 is small, and the support stiffness against the forward displacement of the headrest 13 is great.

In the above-described embodiment, the springs and the beads, which receive pressure from the tilting of the headrest stays 14L, 14R when the headrest 13 is displaced in the front-rear direction of the seat, are provided on the outer circumferential surfaces of the supports 12. The pressure receiving members may be provided on the inner circumferential surfaces of the support brackets 11.

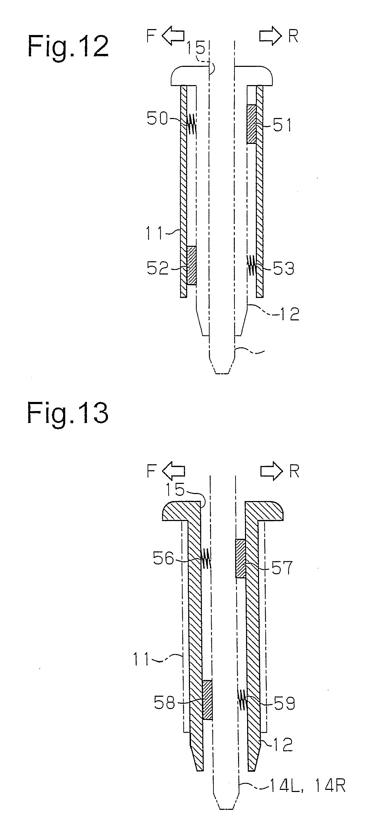

For instance, an example of the support bracket 11 shown in Fig. 12 has, on its inner circumferential surface, a spring 50 at the upper front section, a bead 51 at the upper rear section, a bead 52 at the lower front section, and a spring 53 at the lower rear section. In this case also, pressure is applied to the springs when the headrest stays 14L, 14R and the supports 12 tilt in the seat forward direction F, and pressure is applied to the beads when the headrest stays 14L, 14R and the supports 12 tilt in the seat rearward direction R. In this case also, the support stiffness against the forward displacement of the headrest 13 is small, and the support stiffness against the forward displacement of the headrest 13 is great.

The pressure receiving members such as the springs and the beads may be provided between the bores 15 of the supports 12 and the headrest stays 14L, 14R.

For instance, an example shown in Fig. 13 has, on the inner circumferential surface of the bore 15 that is formed in each support 12, a spring 56 at the upper front section, a bead 57 at the upper rear section, a bead 58 at the lower front section, and a spring 59 at the lower rear section.

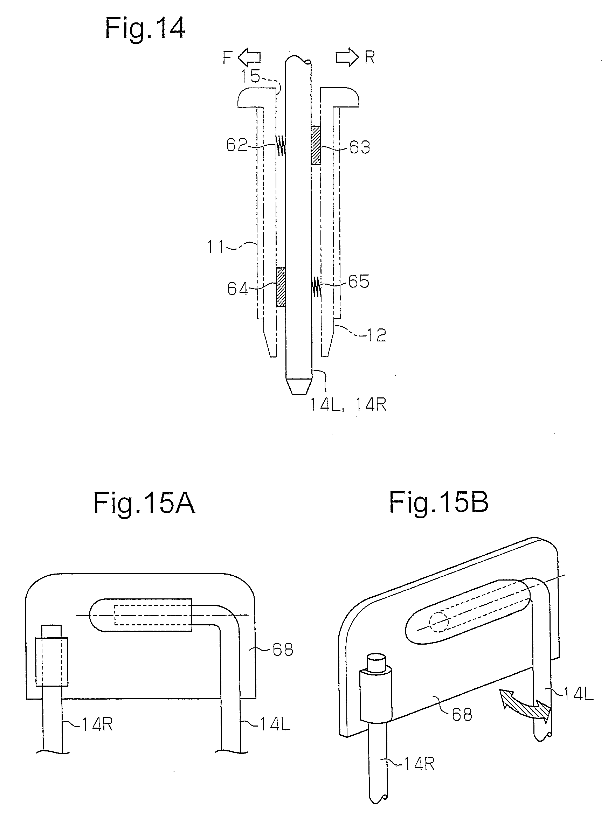

An example shown in Fig. 14 provides, on the outer circumferential surface of the headrest stays 14L, 14R, a spring 62 at the upper front section, a bead 63 at the upper rear section, a bead 64 at the lower front section, and a spring 65 at the lower rear section.

In these cases also, pressure is applied to the springs when the headrest stays 14L, 14R tilt in the seat forward direction F, and pressure is applied to the beads when the headrest stays 14L, 14R tilt in the seat rearward direction R. Thus, in these cases also, the support stiffness against the forward displacement of the headrest 13 is small, and the support stiffness against the forward displacement of the headrest 13 is great.

The above embodiment supports the headrest 13 such that the support stiffness is small if the displacement amount of the headrest 13 in the front-rear direction of the seat is within a certain range as compared to that in the case where the displacement amount is out of the range. By arranging the headrest 13 at the rearmost position (in the seat rearward direction R) of the range in which the support stiffness is small when no external force is applied to the headrest 13, the above embodiment reduces the resonance frequency of the front-rear seat vibration while ensuring the support stiffness against displacement of the headrest 13 in the seat rearward direction R. Of course, arranging the headrest 13 within such a range in which the support stiffness is small when no external force is applied to the headrest 13 allows the support stiffness to be small for the minute displacement of the headrest 13 in the front-rear direction of the seat caused by transmission of vibration and thus reduces the resonance frequency of the vibration in the front-rear direction of the seat. In addition, if great force is applied to significantly displace the headrest 13 in the front-rear direction of the seat, the support stiffness is increased. Nevertheless, if the axes of the left and right headrest stays 14L, 14R are misaligned in the front-rear direction of the seat, or the mounting positions of the support brackets 11 or the supports 12 are displaced due to manufacturing errors, the initial position of the headrest 13 may be out of the above range, and the headrest 13 may fail to have the resonance frequency as designed. Even if this is the case, by employing the two left and right headrest stays 14L, 14R secured in the headrest 13 to be swingable relative to each other in the front-rear direction of the seat, the resonance frequency of the seat of the front-rear vibration is more accurately set.

In the above-described embodiment, the left and right headrest stays 14L, 14R are coupled to the insert 20 to be swingable in the front-rear direction of the seat. However, only one of the left and right headrest stays 14L, 14R may be coupled to the insert 20 to be swingable in the front-rear direction of the seat, and the other one may be coupled to be unable to swing. For instance, Figs. 15A and 15B show an example in which the left headrest stay 14L is coupled to an insert 68 to be swingable in the front-rear direction of the seat, and the right headrest stay 14R is coupled to the insert 68 to be unable to swing. In this case also, when the left headrest stay 14L swings relative to the insert 68 in the front-rear direction of the seat, the left headrest stay 14L also swings relative to the right headrest stay 14R in the front-rear direction of the seat. This means that the stays are permitted to swing relative to each other in the front-rear direction of the seat. In this case, an overlap length of the swingably supported headrest stay 14R on the insert 68, that is, the length of the supported part of the headrest stay 14R is increased. This structure more reliably holds the swing shaft, and increases the stiffness of the headrest 13 when great force is applied.

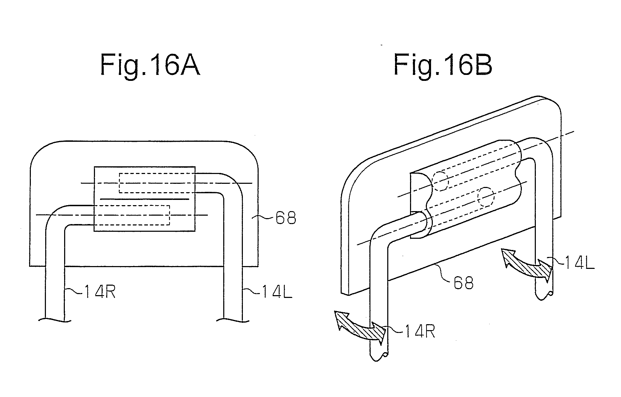

In the above-described embodiment, the left and right headrest stays 14L, 14R are coupled to the insert 20 to be coaxial and swingable in the front-rear direction of the seat, but the swing shafts of the left and right headrest stays 14L, 14R may be displaced. For instance, Figs. 16A and 16B show an example in which the right headrest stay 14R is coupled to the insert 68 at a position above the left headrest stay 14L to be swingable in the front-rear direction of the seat. In this case also, the left and right headrest stays 14L, 14R are allowed to swing relative to each other in the front-rear direction of the seat. Furthermore, such a structure also increases the overlap length of the headrest stays 14L, 14R on the insert 68, and thus more reliably holds the swing shafts and increases the stiffness of the headrest 13 when great force is applied.

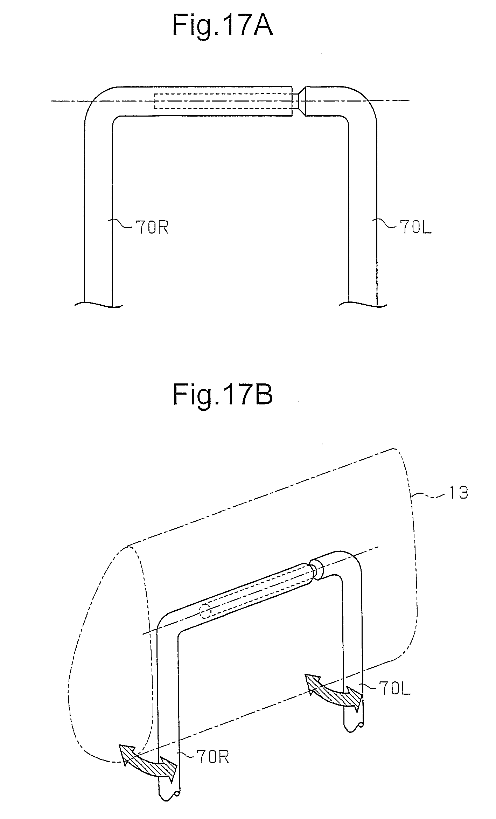

In the above-described embodiment, the left and right headrest stays 14L, 14R are secured via the insert 20 to be swingable in the front-rear direction of the seat, but the left and right headrest stays 14L, 14R may be directly coupled to each other. For instance, Figs. 17A and 17B show an example in which the diameter of the distal end of a left headrest stay 70L is formed to be small, and the distal end of the left headrest stay 70L is rotationally inserted in the distal end of a right headrest stay 70R. In this case also, relative swinging of the headrest stays 70L, 70R prevents the support property from being changed due to manufacturing errors of the members and allows the resonance frequency of the seat of the front-rear vibration to be set more accurately. In contrast, the distal end of one of the left and right headrest stays may be expanded, and the distal end of the other one of the left and right headrest stays may be rotationally inserted in the expanded headrest stay to couple the left and right headrest stays to be swingable relative to each other. This eliminates the weakest section, and further increases the stiffness of the headrest.

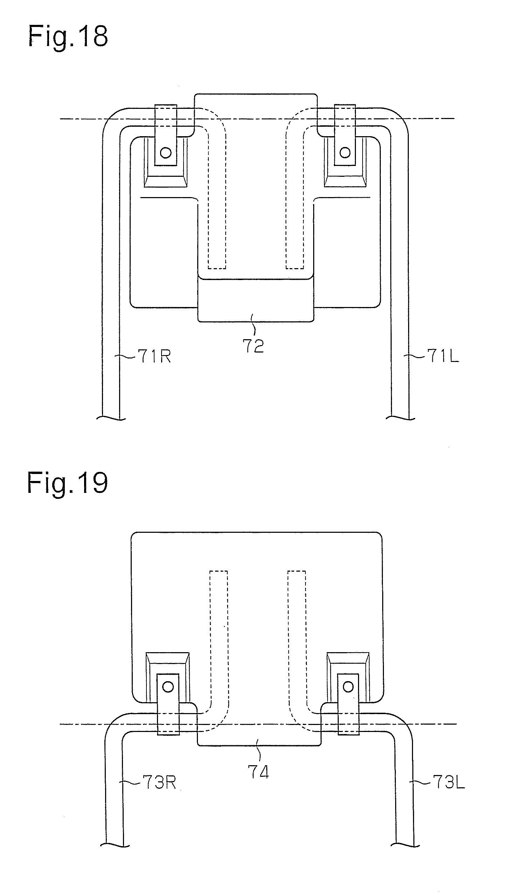

The following structure further increases the support stiffness of the headrest 13 against the rearward movement of the occupant's head, for example, when the vehicle is struck. Fig. 18 shows an example in which left and right headrest stays 71 L, 71 R are bent in the lateral direction of the seat once, and then further bent downward of the seat at the upper section of the seat. The section bent in the lateral direction of the seat is rotationally supported by an insert 72. Alternatively, Fig. 19 shows an example in which left and right headrest stays 73L, 73R are bent in the lateral direction of the seat once, and then further bent upward of the seat at the upper section of the seat. In this example also, the headrest stays 73L, 73R are rotationally supported by an insert 74 at the section bent in the lateral direction of the seat. In these examples also, the left and right headrest stays 70L, 70R are coupled to the insert 72, and the left and right headrest stays 71 L, and 71 R are coupled to the insert 74 to be swingable in the front-rear direction of the seat. The left and right headrest stays 70L, 70R are allowed to swing relative to each other in the front-rear direction of the seat. The left and right headrest stays 71 L, 71 R are allowed to swing relative to each other in the front-rear direction of the seat. In this case, the length of the portion of the headrest stays 70L, 70R, 71 L, 71 R embedded in the headrest 13 is increased, and the support stiffness of the headrest 13 when great force is applied is further increased.

**Claims**

1.   A headrest support structure, comprising:

two headrest stays, which extend downward from a headrest and are arranged to be spaced apart in a lateral direction of a seat; and
a seatback frame supporting the headrest stays, wherein
the headrest stays are tiltable relative to the seatback frame in a front-rear direction of the seat perpendicular to the lateral direction of the seat,
the headrest stays are supported such that, when the tilting amount of the headrest stays relative to the seatback frame in the front-rear direction of the seat is within a specified range, the support stiffness of the headrest relative to the front-rear direction of the seat is small as compared to the support stiffness in a case where the tilting amount is out of the range, and
the two headrest stays are secured in the headrest to be swingable relative to each other in the front-rear direction of the seat.

2.   The headrest support structure according to claim 1, further comprising:

two brackets provided on the seatback frame, the brackets corresponding to the headrest stays; and
two support members, each of which is arranged between one of the brackets and the corresponding headrest stay, wherein

the head rest support structure is configured either such that each support member is swingable relative to the corresponding bracket or such that each headrest stay is swingable relative to the corresponding support member.

3. The headrest support structure according to claim 2, wherein, when each support member is swingable relative to the corresponding bracket,
a first elastic member that urges the headrest stay rearward is provided in an upper section of the support member and between a front side of the support member and the bracket, and
a second elastic member that urges the headrest stay forward is provided in a lower section of the support member and between a rear side of the support member and the bracket.

4. The headrest support structure according to claim 2, wherein, when each headrest stay is swingable relative to the corresponding support member,
a first elastic member that urges the headrest stay rearward is provided in an upper section of the support member and between a front side of the headrest stay and a support member, and
a second elastic member that urges the headrest stay forward is provided in a lower section of the support member and between a rear side of the headrest stay and the support member.

5. The headrest support structure according to claim 3 or 4, wherein the first and second elastic members each include a spring.

6. The headrest support structure according to claim 5, wherein the specified range is a range in which the headrest stays tilt until the springs are completely compressed.

7. The headrest support structure according to any one of claims 1 to 6, wherein the two headrest stays are formed of separate members.

8. The headrest support structure according to claim 7, wherein the two headrest stays are coupled to the headrest in a state separate from each other.

9. The headrest support structure according to any one of claims 1 to 8, wherein
each headrest stay includes an upper section extending in the lateral direction of the seat, and
the upper sections of the headrest stays are coaxial.

Fig.1

# Fig.2

F ⇐      15      14L, 14R      ⇒R

16

17

10

11

19

18

12

# Fig.3

20

14R

14L

EP 2 868 233 A1

# Fig.4A

F ⇦          ⇨ R

~13

15 | ~14L, 14R

16 ~ 17
11 ~ 12
19 ~ 18

# Fig.4B

F ⇦          ⇨ R

~13

15 | ~14L, 14R

16 ~ 17
11 ~ 12
19 ~ 18

# Fig.5

(From Front of Seat)
Load

(Forward of Seat)

(Rearward of Seat)
Displacement

(From Rear of Seat)

Fig.6

Fig.7

Fig.8A

Fig.8B

Fig.9A

Fig.9B

Fig.10

43 ⎯

12 ⎯

Fig.11

F ⇦   15 ⎯   ⇨ R

$k_2 \gg k_1$

44 ⎯ $k_1$   $k_2$ ⎯ 45

11 ⎯

46 ⎯ $k_2$   $k_1$ ⎯ 47

12 ⎯

⎯ 14L, 14R

Fig.12

Fig.13

## Fig.14

## Fig.15A

## Fig.15B

# Fig.16A

68

~14R

~14L

# Fig.16B

68

~14L

~14R

# Fig.17A

# Fig.17B

Fig.18

71R   72   71L

Fig.19

73R   74   73L

# Fig.20A

# Fig.20B

# Fig.21

Fig.22

Fig.23

Fig.24

Fig.25

# Fig.26A

# Fig.26B

## INTERNATIONAL SEARCH REPORT

| International application No. |
| --- |
| PCT/JP2013/068019 |

A. CLASSIFICATION OF SUBJECT MATTER
*A47C7/38*(2006.01)i, *B60N2/48*(2006.01)i

According to International Patent Classification (IPC) or to both national classification and IPC

B. FIELDS SEARCHED

Minimum documentation searched (classification system followed by classification symbols)
A47C7/38, B60N2/48

Documentation searched other than minimum documentation to the extent that such documents are included in the fields searched
Jitsuyo Shinan Koho          1922–1996     Jitsuyo Shinan Toroku Koho     1996–2013
Kokai Jitsuyo Shinan Koho    1971–2013     Toroku Jitsuyo Shinan Koho     1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | Microfilm of the specification and drawings annexed to the request of Japanese Utility Model Application No. 33083/1985(Laid-open No. 149552/1986) (Mitsubishi Motors Corp.), 16 September 1986 (16.09.1986), specification, page 5, line 18 to page 12, line 20; fig. 1 to 7 (Family: none) | 1-3,5-9<br>4 |
| Y<br>A | JP 2005-170144 A  (Toyota Motor Corp.), 30 June 2005 (30.06.2005), paragraphs [0015] to [0016]; fig. 1 (Family: none) | 1-3,5-9<br>4 |

[X]  Further documents are listed in the continuation of Box C.          [ ]  See patent family annex.

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    05 September, 2013 (05.09.13) | Date of mailing of the international search report<br>    17 September, 2013 (17.09.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/068019

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | WO 2010/150372 A1 (Toyota Motor Corp.),<br>29 December 2010 (29.12.2010),<br>paragraphs [0034] to [0048]; fig. 1 to 5<br>& US 2012/0112510 A1     & EP 2447112 A1 | 6<br>4 |
| A | Microfilm of the specification and drawings<br>annexed to the request of Japanese Utility<br>Model Application No. 10739/1981(Laid-open<br>No. 124248/1982)<br>(Delta Kogyo Co., Ltd.),<br>03 August 1982 (03.08.1982),<br>fig. 3<br>(Family: none) | 4 |
| A | Microfilm of the specification and drawings<br>annexed to the request of Japanese Utility<br>Model Application No. 98872/1988(Laid-open<br>No. 19347/1990)<br>(Ikeda Bussan Co., Ltd.),<br>08 February 1990 (08.02.1990),<br>fig. 3<br>(Family: none) | 4 |

Form PCT/ISA/210 (continuation of second sheet) (July 2009)

**EP 2 868 233 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61149552 A

- JP 2005170144 A